# EUROPEAN PATENT APPLICATION

(11) **EP 4 838 079 A1**
(43) Date of publication of application: **11.11.2026**
(21) Application number: 24929455.4
(22) Date of filing: 10.09.2024
(51) Int. Cl.: F02M 21/02, F02D 19/02, F02M 61/04

(54) **GAS ENGINE**

(30) Priority: 12.03.2024 JP 2024038497
(71) Applicant: MITSUBISHI HEAVY INDUSTRIES ENGINE & TURBOCHARGER, LTD., Sagamihara-shi, Kanagawa 252-5293 (JP)
(72) Inventor: TAKAYAMA, Atsushi, Tokyo 100-8332 (JP); TAKEMOTO, Daisuke, Tokyo 100-8332 (JP); IMAMORI, Yusuke, Tokyo 100-8332 (JP); FURUKAWA, Yuta, Sagamihara-shi, Kanagawa 252-5293 (JP)
(74) Representative: Hoffmann Eitle
(86) International application number: PCT/JP2024/032289
(87) International publication number: WO 2025/191889

(57) **Abstract**

A gas engine that combusts a fuel gas containing hydrogen in a combustion chamber includes: an intake line in which an intake passage is formed, the intake passage including an intake port that opens to the combustion chamber; a fuel supply line that is provided separately from the intake line, in which a fuel passage through which the fuel gas flows toward the combustion chamber is formed and an outlet of the fuel passage is open to the combustion chamber; a solenoid valve that is provided in the fuel supply line and that opens and closes the fuel passage; and a check valve that is provided in the fuel supply line on a combustion chamber side of the solenoid valve and that opens and closes the fuel passage by a differential pressure between the fuel passage and the combustion chamber.

## Description

### Technical Field

The present disclosure relates to a gas engine that combusts a fuel gas containing hydrogen in a combustion chamber.

The present application claims the right of priority based on Japanese Patent Application No. 2024-038497 filed with the Japan Patent Office on March 12, 2024, the content of which is incorporated herein by reference.

### Background Art

PTL 1 discloses a gas engine that mixes a fuel gas with air flowing through an intake line and supplies the mixed gas to a combustion chamber. Hydrogen has a higher combustion velocity than other components such as methane and propane. Therefore, in a case where a fuel gas containing hydrogen is applied to the gas engine as disclosed in PTL 1, there is a possibility that a backfire in which a flame enters the intake line may occur. PTL 2 discloses a gas engine including an injector that is provided separately from an intake line and that injects a fuel gas into a combustion chamber. With the gas engine as described in PTL 2, it is possible to suppress the occurrence of a backfire.

### Citation List

### Patent Literature

[PTL 1] Japanese Unexamined Patent Application Publication No. 2009-299592
[PTL 2] Japanese Unexamined Patent Application Publication No. H7-189848

### Summary of Invention

### Technical Problem

However, since an injection pressure of hydrogen is low, it is necessary to prepare a large injector in order to increase a supply amount of hydrogen to the combustion chamber, and a manufacturing cost of the gas engine increases.

The present disclosure has been made in view of the above-described problems, and an object of the present disclosure is to provide a gas engine capable of supplying a large amount of hydrogen to a combustion chamber and capable of suppressing an increase in manufacturing cost.

### Solution to Problem

In order to achieve the above object, a gas engine according to the present disclosure is a gas engine that combusts a fuel gas containing hydrogen in a combustion chamber, the gas engine including: an intake line in which an intake passage is formed, the intake passage including an intake port that opens to the combustion chamber; a fuel supply line that is provided separately from the intake line, in which a fuel passage through which the fuel gas flows toward the combustion chamber is formed and an outlet of the fuel passage is open to the combustion chamber; a solenoid valve that is provided in the fuel supply line and that opens and closes the fuel passage; and a check valve that is provided in the fuel supply line on a combustion chamber side of the solenoid valve and that opens and closes the fuel passage by a differential pressure between the fuel passage and the combustion chamber.

### Advantageous Effects of Invention

According to the gas engine of the present disclosure, it is possible to supply a large amount of hydrogen to the combustion chamber and to suppress an increase in manufacturing cost.

### Brief Description of Drawings

FIG. 1 is a diagram schematically showing a configuration of a gas engine according to a first embodiment.
FIG. 2 is a diagram for describing an opening and closing period of a solenoid valve according to the first embodiment.
FIG. 3A is a diagram for describing an opening and closing period of a solenoid valve according to some embodiments.
FIG. 3B is a diagram for describing an opening and closing period of a solenoid valve according to some embodiments.
FIG. 4 is a graph showing a relationship between a crank angle and a pressure of a gas engine according to the first embodiment.
FIG. 5 is a diagram schematically showing a configuration of a gas engine according to a second embodiment.
FIG. 6 is a diagram for describing an opening and closing period of a leak solenoid valve according to the second embodiment.
FIG. 7 is a graph showing a relationship between a crank angle and a pressure of a gas engine according to the second embodiment.
FIG. 8A is a diagram schematically showing a configuration of a gas engine according to some embodiments.
FIG. 8B is a diagram schematically showing a configuration of a gas engine according to some embodiments.

### Description of Embodiments

Hereinafter, a gas engine according to embodiments of the present disclosure will be described with reference to the drawings. Such embodiments show one aspect of the present disclosure, do not limit this disclosure, and can be optionally changed within the scope of the technical concept of the present disclosure.

### <First Embodiment>

### (Configuration)

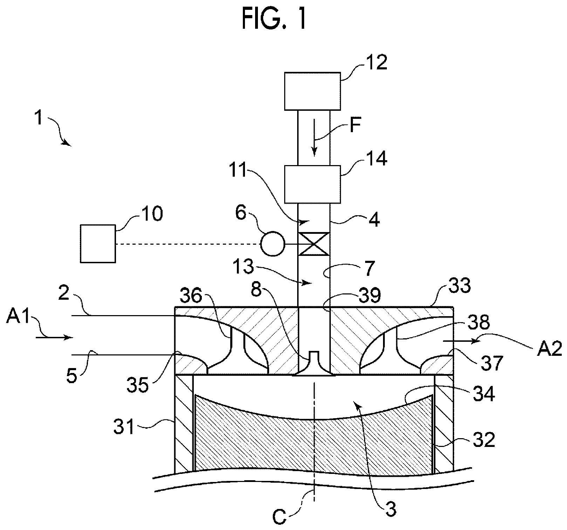

A gas engine 1 according to the present disclosure combusts a fuel gas F containing hydrogen in a combustion chamber 3. FIG. 1 is a diagram schematically showing a configuration of the gas engine 1 according to a first embodiment.

In the present disclosure, the "fuel gas F containing hydrogen" includes a fuel gas containing hydrogen and a fuel other than hydrogen (mixed combustion) and a fuel gas containing only hydrogen (single-fuel combustion), and further, the fuel gas containing hydrogen and the fuel other than hydrogen can be classified into a fuel gas in which hydrogen is a main fuel (a volume ratio of hydrogen is 50% or more) and a fuel gas in which the fuel other than hydrogen is a main fuel (a volume ratio of hydrogen is less than 50%). The "fuel gas F containing hydrogen" includes all of these cases.

First, the combustion chamber 3 will be described. As shown in FIG. 1, the gas engine 1 includes a cylinder liner 31, a piston 32, and a cylinder head 33.

The cylinder liner 31 has a tubular shape. In the first embodiment, the cylinder liner 31 extends along the up-down direction and is open upward. The cylinder liner 31 is fitted into an inner side of a tubular cylinder block (not shown).

The piston 32 is accommodated inside the cylinder liner 31. In the first embodiment, the piston 32 has an upper surface 34 that is recessed downward toward a central axis C of the cylinder liner 31. The piston 32 is configured to reciprocate along the up-down direction inside the cylinder liner 31.

The cylinder head 33 covers an opening of the cylinder liner 31. In the first embodiment, the cylinder head 33 is disposed above the cylinder liner 31. The cylinder head 33 is fixed to a cylinder block (not shown).

The combustion chamber 3 is defined between the piston 32 and the cylinder head 33 in the cylinder liner 31. An intake port 35 that opens to the combustion chamber 3 is formed in the cylinder head 33. The combustion chamber 3 is configured to be supplied with air A1 via the intake port 35. Similarly, an exhaust port 37 that opens to the combustion chamber 3 is formed in the cylinder head 33 separately from the intake port 35. The combustion chamber 3 is configured to discharge exhaust A2 generated by the combustion of the fuel gas F from the combustion chamber 3 via the exhaust port 37. The intake port 35 is opened and closed by an intake valve 36. The exhaust port 37 is opened and closed by an exhaust valve 38.

A configuration of the gas engine 1 according to the present disclosure will be described. As shown in FIG. 1, the gas engine 1 includes an intake line 2, a fuel supply line 4, a solenoid valve 6, a check valve 8, and a control device 10.

An intake passage 5 is formed inside the intake line 2. In the intake line 2, an inlet of the intake passage 5 is open to the atmosphere, and air can be taken in from the outside of the gas engine 1. The air taken into the intake line 2 flows through the intake passage 5 toward the combustion chamber 3. The intake passage 5 includes the intake port 35 described above as an outlet of the intake passage 5.

The fuel supply line 4 is provided separately from the intake line 2, and a fuel passage 7 through which the fuel gas F flows toward the combustion chamber 3 is formed inside the fuel supply line 4. In the first embodiment, the fuel supply line 4 is connected to a fuel supply source 12 in which the fuel gas F is stored. The fuel supply line 4 includes a fuel port 39 formed in the cylinder head 33 as an outlet of the fuel passage 7. The fuel port 39 (outlet of the fuel passage 7) is open to the combustion chamber 3.

The solenoid valve 6 is provided in the fuel supply line 4. The solenoid valve 6 opens and closes the fuel passage 7. Specifically, the solenoid valve 6 is electrically connected to the control device 10, and opens and closes the fuel passage 7 in accordance with an instruction transmitted from the control device 10.

The check valve 8 is provided in the fuel supply line 4 on the combustion chamber 3 side of the solenoid valve 6. The check valve 8 opens and closes the fuel passage 7 by a differential pressure between the fuel passage 7 and the combustion chamber 3. The check valve 8 is configured to allow only a flow in a forward direction from the fuel passage 7 to the combustion chamber 3 and not to allow a flow in a reverse direction. In the first embodiment, the check valve 8 is provided in the fuel port 39. A pressure in the combustion chamber 3 is defined as an in-cylinder pressure P1, a pressure in a portion (hereinafter referred to as an upstream portion 11) of the fuel passage 7 between the solenoid valve 6 and a compressor 14, which will be described later, is defined as a solenoid valve upstream pressure P2, and a pressure in a portion (hereinafter referred to as a downstream portion 13) of the fuel passage 7 between the solenoid valve 6 and the check valve 8 is defined as a solenoid valve downstream pressure P3. The check valve 8 opens and closes the fuel passage 7 by a differential pressure between the in-cylinder pressure P1 and the solenoid valve downstream pressure P3. In the present disclosure, the check valve 8 is described as being opened when the solenoid valve downstream pressure P3 - the in-cylinder pressure P1 > 0.

The control device 10 is a computer such as an electronic control device, and includes a processor such as a central processing unit (CPU) or a graphics processing unit (GPU) (not shown), a memory such as a read-only memory (ROM) or a random-access memory (RAM), an input/output (I/O) interface, and the like. The control device 10 implements each functional unit provided in the control device 10 by the processor operating (performing calculation or the like) in accordance with an instruction of a program loaded in the memory. In some embodiments, the control device 10 is a cloud server provided in a cloud environment.

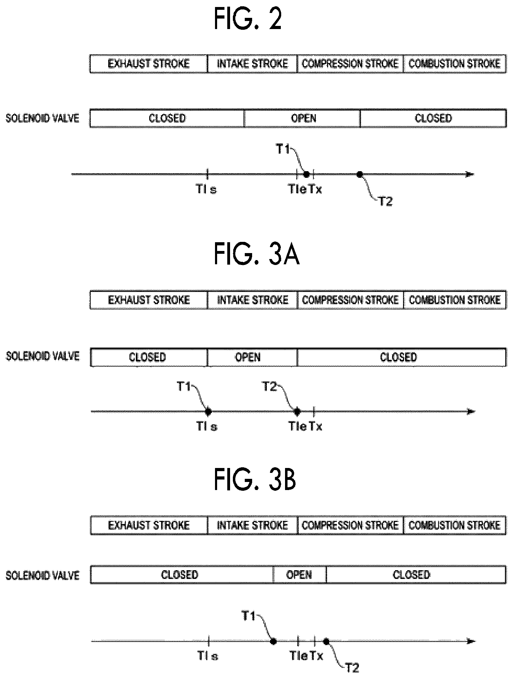

An example of the control of the solenoid valve 6 by the control device 10 will be described. FIG. 2 is a diagram for describing an opening and closing period of the solenoid valve 6 according to the first embodiment. The control device 10 transmits a valve opening command to the solenoid valve 6 at or after a start timing TIs of the intake stroke and before a timing Tx at which the crank angle is rotated by 36 degrees from an end timing TIe of the intake stroke (a time when the in-cylinder pressure P1 becomes equal to the solenoid valve downstream pressure P3). When the solenoid valve 6 receives the valve opening command, the solenoid valve 6 is opened, and the solenoid valve downstream pressure P3 increases. When the differential pressure between the solenoid valve downstream pressure P3 and the in-cylinder pressure P1 becomes larger than 0, the fuel gas F is supplied to the combustion chamber 3. When the solenoid valve 6 is closed during the intake stroke or the compression stroke and the differential pressure between the solenoid valve downstream pressure P3 and the in-cylinder pressure P1 becomes 0 or less, the supply of the fuel gas F to the combustion chamber 3 is blocked by the check valve 8. The combustion stroke is started after the supply of the fuel gas F to the combustion chamber 3 is blocked.

In the first embodiment, as shown in FIG. 2, the control device 10 transmits the valve opening command to the solenoid valve 6 at a valve opening timing T1 after the end timing TIe of the intake stroke. That is, the valve opening timing T1 is within a period of the next compression stroke after the intake stroke. The control device 10 transmits a valve closing command to the solenoid valve 6 within the period of the compression stroke. When the solenoid valve 6 receives the valve closing command, the solenoid valve 6 is closed. The valve opening timing T1 is located on a first half side in the compression stroke, and a valve closing timing T2 at which the solenoid valve 6 is closed is located on a second half side in the compression stroke. A length of a period from the valve opening timing T1 to the valve closing timing T2 is not particularly limited.

In the first embodiment, as shown in FIG. 1, the gas engine 1 further includes a compressor 14 for increasing a pressure of the fuel gas F supplied from the fuel supply source 12. The compressor 14 is provided in the fuel supply line 4 on the upstream side of the solenoid valve 6.

Meanwhile, in the gas engine 1 according to the present disclosure, a method of igniting the fuel gas F in the combustion chamber 3 is not particularly limited. In some embodiments, the gas engine 1 includes an ignition device (spark plug) provided in the combustion chamber 3. In some embodiments, the gas engine 1 includes an ignition device provided in a sub-chamber that is formed separately from the combustion chamber 3 and to which the fuel gas F is supplied. In the gas engine 1, the fuel gas F in the combustion chamber 3 is ignited by a flame generated when the ignition device combusts the fuel gas F in the sub-chamber.

### (Operations and Effects)

Operations and effects of the gas engine 1 according to the first embodiment will be described. According to the first embodiment, since the gas engine 1 applies the solenoid valve 6 and the check valve 8, by increasing the solenoid valve upstream pressure P2 to a high pressure and opening the solenoid valve 6, a large amount of the fuel gas F can be supplied to the combustion chamber 3. In addition, since only the solenoid valve 6 and the check valve 8 are provided in the fuel supply line 4, an increase in the manufacturing cost of the gas engine 1 can be suppressed. In particular, the gas engine 1 according to the present disclosure can reduce the manufacturing cost as compared with a gas engine in which an injector is provided in the cylinder head 33. Further, since the check valve 8 is not opened in a case where the in-cylinder pressure P1 is larger than the solenoid valve downstream pressure P3, it is possible to suppress the gas generated by the combustion of the fuel gas F from flowing into the fuel supply line 4 and damaging the solenoid valve 6.

In a case where the fuel gas F containing hydrogen is applied to the gas engine in the related art, an injection pressure of the fuel gas F is low, and thus a large injector is required to supply a large amount of the fuel gas F to the combustion chamber 3. On the other hand, the gas engine 1 according to the present disclosure is advantageous in that the size of the gas engine 1 can be made compact since the gas engine 1 injects the fuel gas F into the combustion chamber 3 by using the differential pressure between the in-cylinder pressure P1 and the solenoid valve downstream pressure P3 by using the solenoid valve 6 and the check valve 8.

According to the first embodiment, since the gas engine 1 includes the compressor 14, the solenoid valve upstream pressure P2 can be adjusted as desired. That is, the supply amount of the fuel gas F to the combustion chamber 3 can be adjusted as desired.

In a case where the fuel gas F is supplied within the period of the intake stroke, there is a possibility that the fuel gas F flows into the intake passage 5. Hydrogen has a higher combustion velocity than other gases such as methane and propane. Therefore, there is a possibility that a backfire may occur. According to the first embodiment, the solenoid valve 6 is opened within the period of the compression stroke, and the fuel gas F is supplied to the combustion chamber 3. In the compression stroke, since the intake valve 36 closes the intake port 35, it is possible to suppress the inflow of the fuel gas F into the intake line 2 and to suppress the occurrence of a backfire.

The present disclosure is not limited to the timings described in the first embodiment for each of the valve opening timing T1 and the valve closing timing T2. Each of FIGS. 3A and 3B is a diagram for describing an opening and closing period of the solenoid valve 6 according to some embodiments. In the embodiment exemplified in FIG. 3A, the valve opening timing T1 is a start timing TIs of the intake stroke, and the valve closing timing T2 is an end timing TIe of the intake stroke. In the embodiment exemplified in FIG. 3B, the valve opening timing T1 is at or after a timing of a crank angle of 30 degrees before the end timing TIe of the intake stroke, and the valve closing timing T2 is within the period of the compression stroke. That is, a period in which the fuel gas F is supplied spans both the intake stroke and the compression stroke.

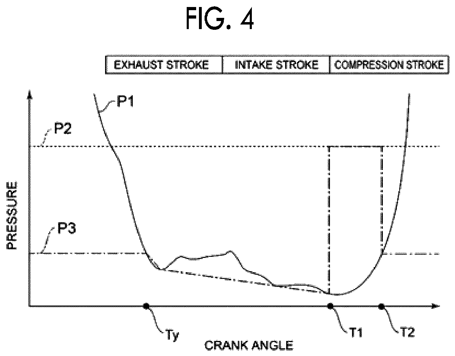

The present inventors have found that, in a case where the valve closing timing T2 is included in the period of the compression stroke, there is a possibility that the check valve 8 may open in the period of the next exhaust stroke. FIG. 4 is a graph showing a relationship between a crank angle and a pressure of the gas engine 1 according to the first embodiment. In FIG. 4, the in-cylinder pressure P1 is shown by a solid line, the solenoid valve upstream pressure P2 is shown by a dotted line, and the solenoid valve downstream pressure P3 is shown by a one-dot chain line.

As shown in FIG. 4, the check valve 8 is closed when the solenoid valve 6 is closed and the solenoid valve downstream pressure P3 is smaller than the in-cylinder pressure P1. Since the downstream portion 13 of the fuel passage 7 is sealed, the solenoid valve downstream pressure P3 is maintained in a state of having a certain magnitude. When the compression stroke proceeds to the next exhaust stroke, the in-cylinder pressure P1 is lowered. Therefore, there is a possibility that the solenoid valve downstream pressure P3 may be larger than the in-cylinder pressure P1 at the timing Ty, and the fuel gas F may flow into the combustion chamber 3 (the leakage of the fuel gas F may occur) during the exhaust stroke. In order to address such a concern, the present inventors propose the gas engine 1 according to the second embodiment.

### <Second Embodiment>

The gas engine 1 according to a second embodiment of the present disclosure will be described. The gas engine 1 according to the second embodiment is different from the first embodiment in that the gas engine 1 further includes a leak line 20. In the second embodiment, the same components as those in the first embodiment are denoted by the same reference signs, and the detailed descriptions thereof will not be repeated.

### (Configuration)

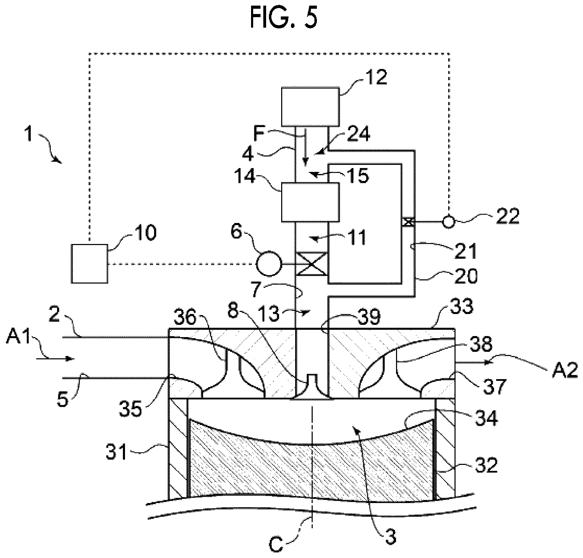

FIG. 5 is a diagram schematically showing a configuration of the gas engine 1 according to the second embodiment. As shown in FIG. 5, the gas engine 1 further includes a leak line 20 and a leak solenoid valve 22.

A leak passage 21 is formed inside the leak line 20. One end of the leak line 20 is connected to a portion of the fuel supply line 4 between the solenoid valve 6 and the check valve 8, and is open to the downstream portion 13 of the fuel passage 7. The other end of the leak line 20 is open to an open space 24. In the embodiment exemplified in FIG. 5, the open space 24 is a portion of the fuel passage 7 between the fuel supply source 12 and the compressor 14 (hereinafter, referred to as an introduction portion 15).

The leak solenoid valve 22 is provided in the leak line 20. The leak solenoid valve 22 opens and closes the leak passage 21. Specifically, the leak solenoid valve 22 is electrically connected to the control device 10, and opens and closes the leak passage 21 in accordance with an instruction transmitted from the control device 10.

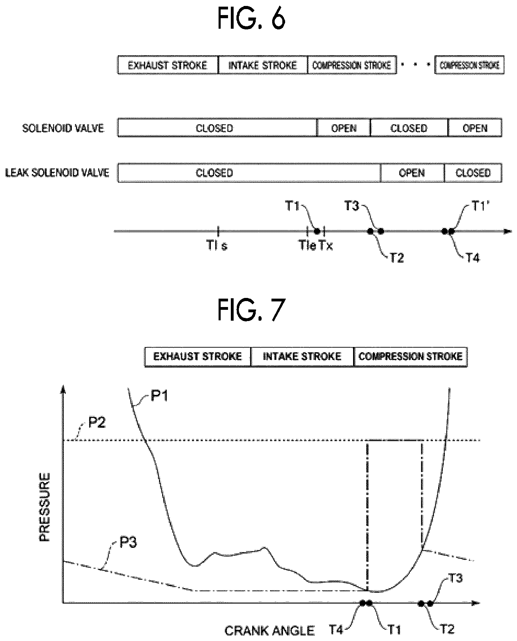

An example of the control of the leak solenoid valve 22 by the control device 10 will be described. FIG. 6 is a diagram for describing an opening and closing period of the leak solenoid valve 22 according to the second embodiment. As described in the first embodiment, the valve closing timing T2 at which the solenoid valve 6 is closed is within the period of the compression stroke. The control device 10 transmits the valve opening command to the leak solenoid valve 22 at a leak valve opening timing T3 during a period from when the solenoid valve 6 is closed in the compression stroke to a next exhaust stroke after the compression stroke. When the leak solenoid valve 22 receives the valve opening command, the leak solenoid valve 22 is opened. In the embodiment exemplified in FIG. 6, the leak valve opening timing T3 is simultaneous with the valve closing timing T2 or immediately after the valve closing timing T2. Then, the control device 10 transmits the valve closing command to the leak solenoid valve 22 before the supply of the fuel gas F to the combustion chamber 3 next time (next valve opening timing T1') starts. When the leak solenoid valve 22 receives the valve closing command, the leak solenoid valve 22 is closed. Therefore, the leak solenoid valve 22 is configured to be closed when the solenoid valve 6 is opened. In the embodiment exemplified in FIG. 6, a leak valve closing timing T4 at which the leak solenoid valve 22 is closed is within a period of the next compression stroke (indicated by a dotted line in FIG. 6). In some embodiments, the leak valve closing timing T4 is within any of a period of the compression stroke, a period of the combustion stroke, and a period of the exhaust stroke.

### (Operations and Effects)

The operations and effects of the gas engine 1 according to the second embodiment will be described. FIG. 7 is a graph showing a relationship between a crank angle and a pressure of the gas engine 1 according to the second embodiment. As described with reference to FIG. 4, in a case where the valve closing timing T2 is included in the period of the compression stroke, there is a possibility that the check valve 8 may be opened in the period of the exhaust stroke. On the other hand, according to the second embodiment, the fuel gas F remaining in the downstream portion 13 of the fuel passage 7 is released to the open space 24 via the leak line 20. Therefore, as shown in FIG. 7, it is possible to prevent the solenoid valve downstream pressure P3 from being larger than the in-cylinder pressure P1 in the period of the exhaust stroke, and to suppress the inflow of the fuel gas F into the combustion chamber 3 during the exhaust stroke.

According to the second embodiment, since the leak solenoid valve 22 is provided in the leak line 20, it is possible to adjust the timing at which the fuel gas F remaining in the downstream portion 13 of the fuel passage 7 is released to the open space 24 as desired. Further, according to the second embodiment, since the leak solenoid valve 22 is closed when the solenoid valve 6 is opened, it is possible to suppress a part of the fuel gas F from being released to the open space 24 when the fuel gas F is supplied to the combustion chamber 3.

The present disclosure is not limited to providing the leak solenoid valve 22 in the leak line 20. In some embodiments, the gas engine 1 includes the intake line 2, the fuel supply line 4, the solenoid valve 6, the check valve 8, and the leak line 20, and the leak solenoid valve 22 is not provided in the leak line 20.

According to the second embodiment, since the introduction portion 15 of the fuel passage 7 is applied as the open space 24, the release of the fuel gas F to the outside of the gas engine 1 is suppressed. Therefore, a decrease in thermal efficiency of the gas engine 1 can be suppressed.

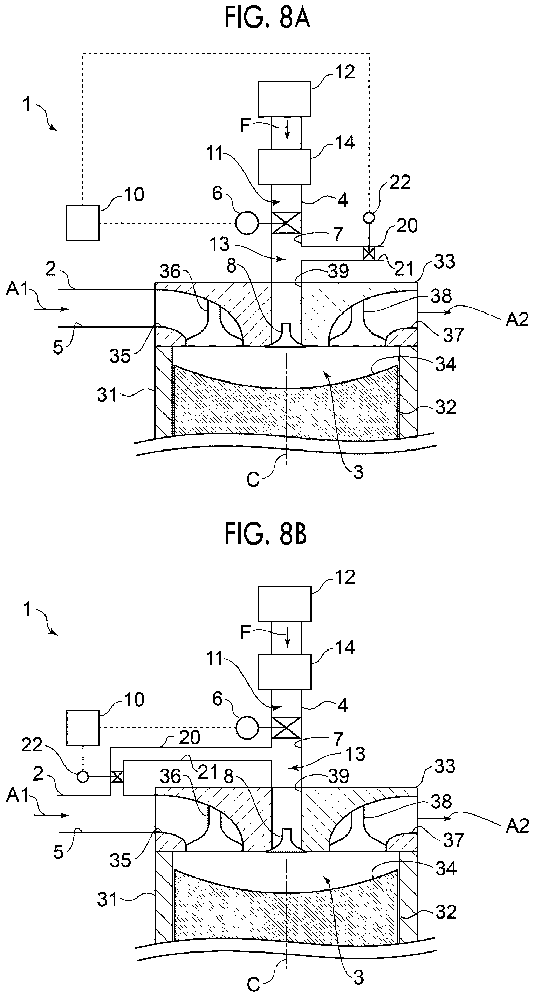

The present disclosure is not limited to applying the introduction portion 15 of the fuel passage 7 as the open space 24. FIGS. 8A and 8B are diagrams schematically showing a configuration of the gas engine 1 according to some embodiments.

In the embodiment exemplified in FIG. 8A, the open space 24 is the atmosphere. That is, the other end of the leak line 20 is open to the atmosphere. With such a configuration, since the leak line 20 is easily manufactured, an increase in manufacturing cost of the gas engine 1 due to the installation of the leak line 20 can be suppressed.

In the embodiment exemplified in FIG. 8B, the open space 24 is the intake passage 5. That is, the other end of the leak line 20 is connected to the intake line 2. With such a configuration, since the release of the fuel gas F to the outside of the gas engine 1 is suppressed, a decrease in thermal efficiency of the gas engine 1 can be suppressed. The open space 24 may be the intake port 35.

The contents described in each of the embodiments above are understood as follows, for example.

[1] A gas engine (1) according to the present disclosure is
   a gas engine that combusts a fuel gas (F) containing hydrogen in a combustion chamber (3), the gas engine including:
   an intake line (2) in which an intake passage (5) is formed, the intake passage including an intake port (35) that opens to the combustion chamber;
   a fuel supply line (4) that is provided separately from the intake line, in which a fuel passage (7) through which the fuel gas flows toward the combustion chamber is formed and an outlet of the fuel passage is open to the combustion chamber;
   a solenoid valve (6) that is provided in the fuel supply line and that opens and closes the fuel passage; and
   a check valve (8) that is provided in the fuel supply line on a combustion chamber side of the solenoid valve and that opens and closes the fuel passage by a differential pressure between the fuel passage and the combustion chamber.

With the configuration according to [1] above, since the solenoid valve and the check valve are applied, by increasing the pressure in a portion of the fuel passage on an upstream side of the solenoid valve to a high pressure and opening the solenoid valve, a large amount of the fuel gas can be supplied to the combustion chamber. In addition, since only the solenoid valve and the check valve are provided in the fuel supply line, an increase in manufacturing cost can be suppressed. The gas engine according to the present disclosure can reduce the manufacturing cost as compared with, for example, a gas engine including an injector.

[2] In some embodiments, in the configuration according to [1] above,
the gas engine further includes a leak line (20) in which a leak passage (21) is formed, the leak line having one end which is connected to a portion (13) of the fuel supply line between the solenoid valve and the check valve and the other end which is open to an open space (24).

In a case where the solenoid valve is closed during a period of a compression stroke, there is a possibility that the fuel gas having a pressure that causes the check valve to be opened during an exhaust stroke remains in the portion of the fuel supply line between the solenoid valve and the check valve. In this case, there is a possibility that the fuel gas flows into the combustion chamber (the fuel gas leaks) during the exhaust stroke. On the other hand, with the configuration according to [2] above, the fuel gas remaining in the portion of the fuel supply line between the solenoid valve and the check valve can be released to the open space via the leak line, and the inflow of the fuel gas into the combustion chamber during the exhaust stroke can be suppressed.

[3] In some embodiments, in the configuration according to [2] above,
the gas engine further includes a leak solenoid valve (22) that is provided in the leak line and that opens and closes the leak passage,
in which the leak solenoid valve is configured to be closed when the solenoid valve is opened.

With the configuration according to [3] above, it is possible to adjust the timing at which the fuel gas remaining in the portion of the fuel supply line between the solenoid valve and the check valve is released to the open space as desired. Further, it is possible to suppress a part of the fuel gas from being released to the open space when the fuel gas is supplied to the combustion chamber.

[4] In some embodiments, in the configuration according to [3] above,
the solenoid valve is configured to be closed in a compression stroke, and
the leak solenoid valve is configured to be opened during a period from when the solenoid valve is closed in the compression stroke to a next exhaust stroke after the compression stroke.

With the configuration according to [4] above, the fuel gas remaining in the portion of the fuel supply line between the solenoid valve and the check valve can be released to the open space while suppressing an adverse effect on the operation of the gas engine.

[5] In some embodiments, in the configuration according to [2] above,
the open space is the atmosphere.

With the configuration according to [5] above, since the leak line is easily manufactured, an increase in manufacturing cost due to the installation of the leak line can be suppressed.

[6] In some embodiments, in the configuration according to [2] above,
the open space is the intake passage.

With the configuration according to [6] above, since the release of the fuel gas to the outside of the gas engine is suppressed, a decrease in thermal efficiency can be suppressed.

[7] In some embodiments, in the configuration according to [2] above,
the open space is a portion of the fuel passage on an upstream side of the solenoid valve in the fuel supply line.

With the configuration according to [7] above, since the release of the fuel gas to the outside of the gas engine is suppressed, a decrease in thermal efficiency can be suppressed.

[8] In some embodiments, in the configuration according to any one of [1] to [7] above,
the gas engine further includes a compressor (14) that is provided in the fuel supply line on an upstream side of the solenoid valve and that increases a pressure of the fuel gas.

With the configuration according to [8] above, it is possible to adjust the pressure on the upstream side of the solenoid valve in the fuel passage as desired.

[9] In some embodiments, in the configuration according to any one of [1] to [7] above,
the solenoid valve is configured to be opened at or after a timing of a crank angle of 30 degrees before an end timing (TIe) of an intake stroke.

With the configuration according to [9] above, it is possible to suppress the fuel gas from flowing into the intake line during the intake stroke and to suppress the occurrence of backfire.

[10] In some embodiments, in the configuration according to [9] above, the solenoid valve is configured to be opened after the end timing.

With the configuration according to [10] above, it is possible to further suppress the occurrence of backfire as compared with the configuration according to [9] above.

### Reference Signs List

1: gas engine
2: intake line
3: combustion chamber
4: fuel supply line
5: intake passage
6: solenoid valve
7: fuel passage
8: check valve
10: control device
11: upstream portion of fuel passage
12: fuel supply source
13: downstream portion of fuel passage
14: compressor
15: introduction portion of fuel passage
20: leak line
21: leak passage
22: leak solenoid valve
24: open space
31: cylinder liner
32: piston
33: cylinder head
34: upper surface of piston
35: intake port
36: intake valve
37: exhaust port
38: exhaust valve
39: fuel port
C: central axis of cylinder liner
F: fuel gas
P1: in-cylinder pressure
P2: solenoid valve upstream pressure
P3: solenoid valve downstream pressure
T1: valve opening timing
T2: valve closing timing
T3: leak valve opening timing
T4: leak valve closing timing
TIe: end timing
TIs: start timing

## Claims

1. A gas engine that combusts a fuel gas containing hydrogen in a combustion chamber, the gas engine comprising:
an intake line in which an intake passage is formed, the intake passage including an intake port that opens to the combustion chamber;
a fuel supply line that is provided separately from the intake line, in which a fuel passage through which the fuel gas flows toward the combustion chamber is formed and an outlet of the fuel passage is open to the combustion chamber;
a solenoid valve that is provided in the fuel supply line and that opens and closes the fuel passage; and
a check valve that is provided in the fuel supply line on a combustion chamber side of the solenoid valve and that opens and closes the fuel passage by a differential pressure between the fuel passage and the combustion chamber.

2. The gas engine according to Claim 1, further comprising:
a leak line in which a leak passage is formed, the leak line having one end which is connected to a portion of the fuel supply line between the solenoid valve and the check valve and the other end which is open to an open space.

3. The gas engine according to Claim 2, further comprising:
a leak solenoid valve that is provided in the leak line and that opens and closes the leak passage,
wherein the leak solenoid valve is configured to be closed when the solenoid valve is opened.

4. The gas engine according to Claim 3,
wherein the solenoid valve is configured to be closed in a compression stroke, and
the leak solenoid valve is configured to be opened during a period from when the solenoid valve is closed in the compression stroke to a next exhaust stroke after the compression stroke.

5. The gas engine according to Claim 2,
wherein the open space is the atmosphere.

6. The gas engine according to Claim 2,
wherein the open space is the intake passage.

7. The gas engine according to Claim 2,
wherein the open space is a portion of the fuel passage on an upstream side of the solenoid valve in the fuel supply line.

8. The gas engine according to any one of Claims 1 to 7, further comprising:
a compressor that is provided in the fuel supply line on an upstream side of the solenoid valve and that increases a pressure of the fuel gas.

9. The gas engine according to any one of Claims 1 to 7,
wherein the solenoid valve is configured to be opened at or after a timing of a crank angle of 30 degrees before an end timing of an intake stroke.

10. The gas engine according to Claim 9,
wherein the solenoid valve is configured to be opened after the end timing.
